# EUROPÄISCHE PATENTSCHRIFT

(11) **EP 1 219 039 B1**
(45) Veröffentlichungstag und Bekanntmachung des Hinweises auf die Patenterteilung: **23.07.2003**
(21) Anmeldenummer: 00975819.4
(22) Anmeldetag: 28.09.2000
(51) Int. Cl.: H04B 1/707, H04L 27/20

(54) **EINRICHTUNG UND VERFAHREN ZUR VERARBEITUNG EINES DIGITALEN DATENSIGNALS IN EINEM CDMA-FUNKSENDER**
DEVICE AND METHOD FOR PROCESSING A DIGITAL DATA SIGNAL IN A CDMA RADIO TRANSMITTER
DISPOSITIF ET PROCEDE POUR LE TRAITEMENT D'UN SIGNAL DE DONNEES NUMERIQUE

(30) Priorität: 06.10.1999 DE 19948370
(43) Veröffentlichungstag der Anmeldung: 03.07.2002
(73) Patentinhaber: Infineon Technologies AG, 81669 München (DE)
(72) Erfinder: DOETSCH, Markus, 56072 Koblenz-Rübenach (DE); JUNG, Peter, 67697 Otterberg (DE); PLECHINGER, Jörg, 80469 München (DE); SCHMIDT, Peter, 82008 Unterhaching (DE); SCHNEIDER, Michael, 56823 Büchel (DE); KELLA, Tideya, 80337 München (DE)
(74) Vertreter: Lange, Thomas, Dr.
(86) Internationale Anmeldenummer: DE0003467
(87) Internationale Veröffentlichungsnummer: WO01026242

(56) Entgegenhaltungen:
- EP-A- 0 751 630
- US-A- 4 930 141
- US-A- 5 872 810
- OVESJÖ FREDRIK: "UTRA PHYSICAL LAYER DESCRIPTION FDD PARTS" EUROPEAN TELECOMMUNICATION STANDARD,XX,XX, 25. Juni 1998 (1998-06-25), Seiten 1-41, XP002141421

## Beschreibung

Die Erfindung betrifft eine Einrichtung und ein Verfahren zur Verarbeitung eines digitalen Datensignals in einem CDMA-Funksender.

Zellulare Mobilfunksysteme der ersten Generation (Beispiele: AMPS (advanced mobile phone service), NMP (Nordic mobile telephone), TACS (total access communication system), C-Netz) konnten Sprache mit einer Datenrate von maximal 2 kbit/s übertragen und waren bis etwa 1992 im Einsatz. Mobilfunksysteme der zweiten Generation (beispielsweise das paneuropäische GSM (global system for mobile communications)) ermöglichen eine Übertragung von Sprache und Daten mit einer Datenrate von etwa 10 kbit/s. Derzeit wird weltweit an der Entwicklung von Funksendern/-empfängern für Mobilfunksysteme der dritten Generation, insbesondere UMTS (universal mobile telecommunication system), gearbeitet. Da Mobilfunksysteme der dritten Generation zur Übertragung von Multimedia (d.h. Sprache/Daten/Video) mit einer im Vergleich zur zweiten Generation wesentlich erhöhten Datenrate von 2 Mbit/s vorgesehen sind, besteht eine erhebliche Schwierigkeit darin, Sender- und Empfängersysteme zu entwickeln, die eine derart hohe Datenrate mit möglichst geringem Verbrauch an Energie (d.h. langer Akku-Standzeit) bewältigen können.

Mobilfunksysteme der dritten Generation verwenden als Vielfachzugriffsverfahren Codemultiplex (CDMA: code division multiple access). Beim CDMA belegen alle Teilnehmer denselben Frequenzbereich, jedoch wird das Funksignal für bzw. von jedem Teilnehmer unterschiedlich codiert. Durch die unterschiedliche Codierung wird eine Teilnehmerseparierung ermöglicht.

In Mobilfunksendern ist es bereits allgemein bekannt, eine spektrale Formung (Filterung) des zu sendenden Signals sowie gegebenenfalls auch eine Frequenzkorrektur seiner Mittenfrequenz vorzunehmen. Der Zweck dieser beiden Maßnahmen besteht darin, das Sendesignal in bezug auf seine Bandbreite und Frequenzlage an einen gewünschten Verkehrskanal anzupassen. Sowohl die Filterung als auch die Frequenzkorrektur werden in der Regel nach einer Digital-Analog-Umsetzung des Sendesignals am analogen Sendesignal ausgeführt.

EP-A-0 751 630 offenbart einen CDMA-Basisstations-sender unit spektraler Formung der Basisband-Digital signale.

Der Erfindung liegt die Aufgabe zugrunde, eine Einrichtung sowie ein Verfahren zur Verarbeitung eines digitalen Datensignals in einem CDMA-Funksender zu schaffen, das eine besonders effiziente und aufwandsgünstige Signalverarbeitung eines Sendesignals realisiert und damit für hohe Datenraten geeignet ist. Insbesondere soll die Einrichtung bzw. das Verfahren für UMTS geeignet sein.

Die der Erfindung zugrunde liegende Aufgabenstellung wird durch die Merkmale der Ansprüche 1 und 9 gelöst.

Demnach wird die CDMA-Kanalisierung (CDMA-Codierung), die spektrale Formung und die Frequenzkorrektur sämtlich durch eine digitale Signalbearbeitung durchgeführt. Dabei konnte durch Simulationsrechnungen gezeigt werden, daß die unter den Gesichtspunkten der Energieeffizienz, des Hardware-Aufwands und der erreichbaren maximalen Datenverarbeitungsgeschwindigkeit günstigste Realisierung durch die erfindungsgemäße Reihenfolge CDMA-Kanalcodierung - spektrale Formung - Frequenzkorrektur erzielt wird.

Um eine hohe Genauigkeit bei der Frequenzkorrektur erreichen zu können, ist es vorteilhaft, wenn das von der spektralen Formungseinrichtung ausgegebene digitale, spektral geformte Datensignal eine M-fach höhere Datenrate als das digitale, Kanal-individualisierte Datensignal am Ausgang der Kanalisierungseinrichtung aufweist. Dabei ist M eine ganze Zahl, für die M ≥ 2 gilt.

Nach einer ersten bevorzugten Ausführungsvariante der Erfindung umfaßt die Frequenzkorrektureinrichtung einen Multiplizierer, mittels welchem eine schmalbandige Frequenzkorrekturfolge auf das spektral geformte Datensignal aufmultipliziert wird. In diesem Fall wird der für die Frequenzkorrektureinrichtung benötigte Hardware-Aufwand gering gehalten.

Eine zweite Variante zur Realisierung der Frequenzkorrektureinrichtung besteht darin, daß diese ein Rechenwerk umfaßt, welches mittels eines CORDIC-Algorithmus aus dem spektral geformten Datensignal ein frequenzkorrigiertes, spektral geformtes Datensignal berechnet. Diese Variante benötigt mehr Hardware, weist jedoch den Vorteil auf, daß die Frequenzkorrektur mit einer prinzipiell unbeschränkten Genauigkeit durchgeführt werden kann.

Besonderen Vorteil bietet die Erfindung im Falle von CDMA-Codes mit variablem Spreizfaktor Q, die auch als OVSF-(orthogonal variable spreading factor)Codes bezeichnet werden. Q kann beispielsweise einen Wert zwischen 4 und 512 annehmen.

Zum Aufprägen einer Basisstations-Kennung auf das Datensignal kann eine komplexe Verwürfelungseinrichtung vorgesehen sein. Vorzugsweise befindet sich diese dann im Signalweg zwischen der Kanalisierungseinrichtung und der spektralen Formungseinrichtung.

Sofern im Signalweg eine Gewichtungseinrichtung vorgesehen ist, welche jedes Datensymbol der Datenfolge mit einem Gewichtsfaktor multipliziert, befindet sich diese vorzugsweise im Signalweg vor der Kanalisierungseinrichtung.

Vorzugsweise sind die genannten Einrichtungen als logische Schaltwerke ausgeführt, d.h. erhalten keinen Microcomputer bzw. Arithmetikprozessor. Dadurch wird eine maximale Verarbeitungsgeschwindigkeit erreicht.

Weitere vorteilhafte Ausgestaltungen der Erfindung sind in den Unteransprüchen angegeben.

Die Erfindung wird im folgenden anhand eines Ausführungsbeispiels unter Bezugnahme auf die Zeichnung erläutert; in dieser zeigt:
- Fig. 1: ein Blockschaltbild eines Funksenders zur allgemeinen Erläuterung der Signalverarbeitung in demselben;
- Fig. 2: ein Blockschaltbild der in Fig. 1 dargestellten Modulatoreinrichtung;
- Fig. 3: ein Schaltbild der in Fig. 2 dargestellten Modulator-Logikschaltung für vier Datensignale;
- Fig. 4: eine Darstellung, die zwei Varianten einer erfindungsgemäßen Frequenzkorrektureinrichtung in Form von Blockschaltbildern darstellt; und
- Fig. 5: ein Schaltbild der spektralen Formungseinrichtung aus Fig. 3.

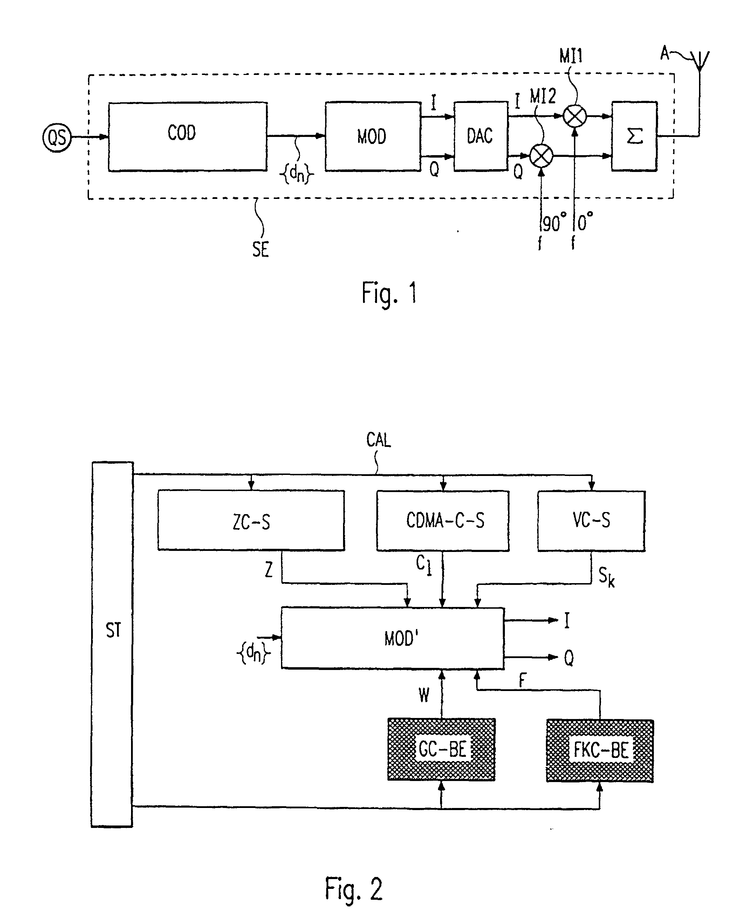

Fig. 1 zeigt die als solche bereits bekannte prinzipielle Struktur einer Sendeeinrichtung SE eines Funksenders, wie er in einer Basisstation oder einer Mobilstation eines Mobilfunksystems eingesetzt wird.

Die Sendeeinrichtung SE nimmt ein (beispielsweise durch ein Mikrofon erzeugtes) analoges Quellensignal QS entgegen und führt dieses einem Codierer COD zu. Der Codierer COD umfaßt in nicht dargestellter Weise einen Analog-Digital-Umsetzer zur Digitalisierung des Quellensignals QS und kann ferner einen Quellencodierer, einen Kanalcodierer, einen Verschachteler und einen Blockbildner enthalten, die das digitalisierte Quellensignal QS in geeigneter Weise Quellen-codieren, fehlerschutzcodieren, verschachteln und in Datenblöcke unterteilen.

Der Codierer COD gibt ein binäres Datensignal aus, das aus einer Datenfolge {dₙ} der Datensymbole d₀, d₁, ... besteht. Die Datensymbole d₀, d₁, ... können beispielsweise dem Wertevorrat {-1, 1} entnommen sein.

Die Datenfolge {dₙ} wird einer Modulatoreinrichtung MOD zugeführt, die jedem Datensymbol einen Teilnehmer-individuellen (oder allgemeiner: für einen logischen Kanal spezifischen) CDMA-Spreizcode aufprägt und die Datenfolge für die Abstrahlung über einen hochfrequenten Träger spektral formt (d.h. moduliert).

Die Modulatoreinrichtung MOD nimmt ferner eine Aufteilung des Datensignals in einen Inphasal-(I)Zweig und einen Quadratur-(Q)Zweig vor. Die von der Modulatoreinrichtung MOD ausgegebenen I- und Q-Signalkomponenten werden einem Digital-Analog-Umsetzer DAC zugeführt, der entsprechende analoge I- und Q-Signalkomponenten erzeugt. Diese werden jeweils in Mischstufen MI1 bzw. MI2 mittels eines hochfrequenten Trägers der Frequenz f unter 90° Phasenversatz zueinander hochgemischt, überlagert und über eine Antenne A als Funksignal abgestrahlt.

Fig. 2 erläutert die in der Modulatoreinrichtung MOD implementierten Datenverarbeitungsabläufe. Dabei sind die durch weiße Blöcke repräsentierten Verarbeitungsabläufe unmittelbar in Hardware implementiert, während die Verarbeitungsabläufe in den grau unterlegten Blöcken mittels Firmware realisiert werden.

Mit einer zentralen Modulator-Logikschaltung MOD' stehen ein Verwürfelungscode-Speicher VC-S, ein CDMA-Code-Speicher CDMA-C-S und ein Zugriffscode-Speicher ZC-S in Verbindung. Der Verwürfelungscode-Speicher VC-S kann mehrere Verwürfelungscodes Sᵢ, der CDMA-Code-Speicher CDMA-C-S kann mehrere CDMA-Codes Cᵢ, i = 1, 2, ..., und der Zugriffscode-Speicher ZC-S kann einen Zuriffscode Z speichern.

Jeder Verwürfelungscode Sᵢ ist eine Kennung für eine bestimmte Basisstation. Befindet sich die Sendeeinrichtung SE in einer Basisstation, so ist in VC-S nur ein Verwürfelungscode S (nämlich der dieser Basisstation zugeordnete Verwürfelungscode) gespeichert.

Jeder CDMA-Code Cᵢ definiert, wie bereits erwähnt, einen logischen Kanal. Unterschiedliche logische Kanäle werden hauptsächlich zur Teilnehmerseparierung eingesetzt. Dabei ist einem bestimmten Teilnehmer (d.h. einer bestimmten Mobilstation) nicht ein bestimmter CDMA-Code fest zugeteilt, sondern es wird bei einer Gesprächsaufnahme zwischen der Basisstation und der Mobilstation ein geeigneter CDMA-Code "ausgehandelt". Der CDMA-Code-Speicher CDMA-C-S enthält daher stets eine Mehrzahl von CDMA-Codes Cᵢ.

Der Zugriffscode Z wird nur am Beginn eines Gespräches zur Signalisierung einer Gesprächsanfrage benötigt. Er wird im folgenden nicht näher betrachtet.

Die Speicher VC-S, CDMA-C-S und ZC-S stehen über eine Code-Auswahlleitung CAL mit einer Steuereinrichtung ST in Verbindung. Die Steuereinrichtung ST bestimmt durch Ausgabe von Codenummern k und l Zeitpunkt und Identität der jeweiligen Codes Sₖ und Cₗ, die in der Modulator-Logikschaltung MOD' zur Anwendung kommen sollen.

Die Modulator-Logikschaltung MOD' ist ferner mit einer Frequenzkorrekturcode-Berechnungseinheit FKC-BE und einer Gewichtscode-Berechnungseinheit GC-BE verbunden. Die FKC-BE und die GC-BE berechnen auf der Basis von zeitlich veränderlichen Steuersignalen, die von der Steuereinrichtung ST bereitgestellt werden, fortlaufend aktualisierte Versionen eines Frequenzkorrekturcodes F bzw. eines Gewichtscodes W. Die aktuellen Frequenzkorrekturcodes F und Gewichtscodes W werden ebenfalls der Modulator-Logikschaltung MOD' zugeführt.

Wie im folgenden noch näher erläutert, kann mittels des Frequenzkorrekturcodes F eine gezielte spektrale Verschiebung des digitalen Sendesignals zur Kompensation einer unerwünschten Frequenzverstimmung zwischen Empfänger und Sender (beispielsweise aufgrund von Oszillatordrifts, Dopplereffekts, usw.) bewirkt werden.

Der Gewichtscode W ermöglicht eine Pegelanpassung des ausgesendeten Signals, auf die ebenfalls im folgenden noch näher eingegangen wird.

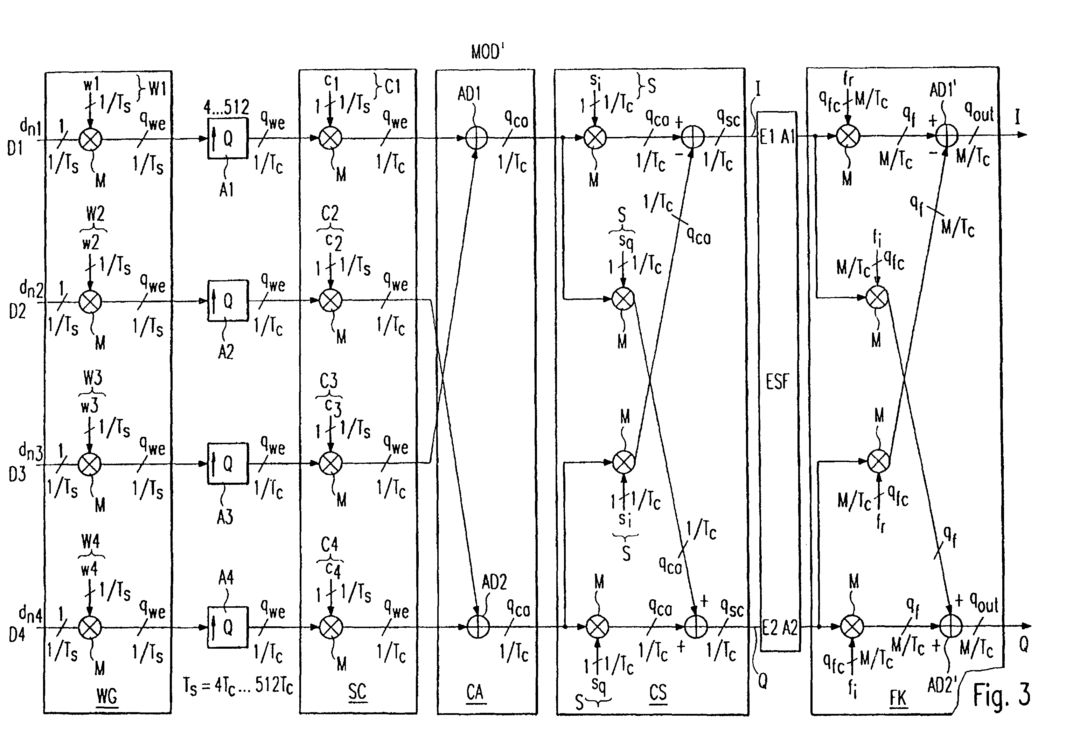

Fig. 3 zeigt in näherer Einzelheit den Aufbau der Modulator-Logikschaltung MOD'. Die Modulator-Logikschaltung MOD' unterscheidet sich von der in der Fig. 2 gezeigten Modulator-Logikschaltung MOD' lediglich dadurch, daß sie vier Dateneingänge D1, D2, D3 und D4 aufweist und sich somit zum gleichzeitigen Aufbau von vier logischen Kanälen eignet. Aufgrund des kanalweise identischen Aufbaus werden die beiden Modulatorschaltungen aus Fig. 2 und 3 mit demselben Bezugszeichen MOD' bezeichnet.

An den Dateneingängen D1, D2, D3 und D4 liegen die binären Datenfolgen {dₙ₁}, {dₙ₂}, {dₙ₃} und {dₙ₄} mit der Datensymbolrate 1/Tₛ an. Dabei bezeichnet Tₛ die Zeitdauer der einzelnen Datensymbole dₙ₁ (bzw. dₙ₂, dₙ₃, dₙ₄). Die einzelnen Datensymbole dₙ₁, dₙ₂, dₙ₃, dₙ₄ können wiederum dem Wertevorrat {1, -1} entnommen sein.

In einer (optionalen) Gewichtungseinheit WG werden die Datensymbole (Wortbreite 1) durch Multiplikation mit Elementen (Gewichtsfaktoren) w1, w2, w3 bzw. w4 der Gewichtscodes W1, W2, W3 und W4 im Symboltakt gewichtet. Hierzu weist die Gewichtungseinheit WG vier Multiplizierer M auf, die die Datensymbole dₙ₁ mit dem Gewichtsfaktor w1, die Datensymbole dₙ₂ mit dem Gewichtsfaktor w2, usw., multiplizieren. An den Ausgängen der Gewichtungseinheit WG bereitstehende Datensignale weisen eine Wortbreite q_{we} > 1 auf. Ihre Signalrate ist unverändert 1/Tₛ.

Die Gewichtsfaktoren w1, w2, w3, w4 können als "Lautstärken-Faktoren" aufgefaßt werden. Durch Verwendung kanalweise unterschiedlicher Gewichtsfaktoren w1, w2, w3, w4 können unterschiedliche Funkdistanzen bezüglich der verschiedenen Kanäle berücksichtigt werden und/oder bei Verwendung kanalweise verschiedener Spreizfaktoren Q die dadurch bewirkten unterschiedlichen Kanalenergien kompensiert werden.

Die gewichteten Datenfolgen {dₙ₁}, {dₙ₂}, {dₙ₃} und {dₙ₄} werden von Abtaststufen A1, A2, A3, A4 in Überabtastung (Überabtastfaktor Q) abgetastet. Dadurch wird die Signalrate in jedem Signalweg von 1/Tₛ auf 1/T_{c} erhöht, wobei T_{c} die Chipzeitdauer bezeichnet, die die Zeitbasis für die spätere CDMA-Spreizcodierung darstellt. Der Überabtastfaktor Q wird daher auch als Spreizfaktor Q bezeichnet. Er kann kanalweise unterschiedlich sein und zwischen 4 und 512 betragen, d.h. Tₛ = 4T_{c}...512T_{c}.

Im Falle einer UMTS-Sendeeinrichtung der dritten Mobilfunk-Generation beträgt die Signalrate 1/T_{c} am Ausgang der Abtaststufen A1, A2, A3, A4 3,84 x 10⁶ Abtastungen pro Sekunde.

Die Q-fach überabgetasteten Datensymbole dₙ₁, dₙ₂, dₙ₃, dₙ₄ werden dann in dem Spreizcodierer SC durch Aufprägen einer kanalspezifischen, digitalen Spreizcodefolge spreizcodiert.

Auf jedes von dem ersten Dateneingang D1 zugeführte Datensymbol dₙ₁ wird mittels eines Multiplizierers M eine erste Spreizcodefolge C1 bestehend aus Q digitalen Chips c₁ (Wortbreite 1) aufmultipliziert. Bezüglich der von den weiteren Dateneingängen D2, D3, D4 zugeführten Datensymbole dₙ₂, dₙ₃, dₙ₄ wird entsprechend verfahren. Die Spreizcodefolgen C1, C2, C3, C4 entsprechen jeweils der ausgewählten Spreizcodefolge C₁ in Fig. 2. Durch Aufprägen der Spreizcodefolgen C1, C2, C3, C4 erhält jedes Datensymbol dₙ₁, dₙ₂, dₙ₃, dₙ₄ gleichsam einen "Fingerabdruck" seines Kanals. Am Ausgang des Spreizcodierers SC stehen die spreizcodierten Datensignale mit einer Signalrate von 1/T_{c} - d.h. der Chiprate - und einer (unveränderten) Wortbreite von q_{we} bereit.

Im Signalweg hinter dem Spreizcodierer SC befindet sich ein Kanaladdierer CA. Der Kanaladdierer CA umfaßt zwei im Chiptakt arbeitende Addierer AD1, AD2. Der Addierer AD1 addiert die von den Dateneingängen D1, D3 stammenden Signaldaten und der Addierer AD2 addiert die von den Dateneingängen D2 und D4 stammenden Signaldaten. An den beiden Ausgängen des Kanaladdierers CA liegen Datensignale mit einer Signalrate von 1/T_{c} und einer (gegebenenfalls erhöhten) Wortbreite von q_{ca} vor.

Ein komplexer Verwürfler CS dient zum Aufprägen einer Basisstations-Kennung auf die Datensignale. Zu diesem Zweck werden die von dem Kanaladdierer CA ausgegebenen Signale in der dargestellten Weise mit den Real- bzw. Imaginärteilen s_{q} bzw. sᵢ der Elemente der komplexwertigen Verwürfelungs-Codefolge S (entspricht dem ausgewählten Code Sₖ in Fig. 2, Wortbreite der entsprechenden Multiplizierereingänge ist 1) multipliziert und nachfolgend wie gezeigt kreuzweise addiert. Ferner dient der komplexe Verwürfler CS zur Erzeugung der I- und Q-Signalkomponenten des Sendesignals, die am Ausgang des komplexen Verwürflers CS mit einer Signalrate von 1/T_{c} und einer ggf. veränderten Wortbreite von q_{sc} zur Verfügung stehen.

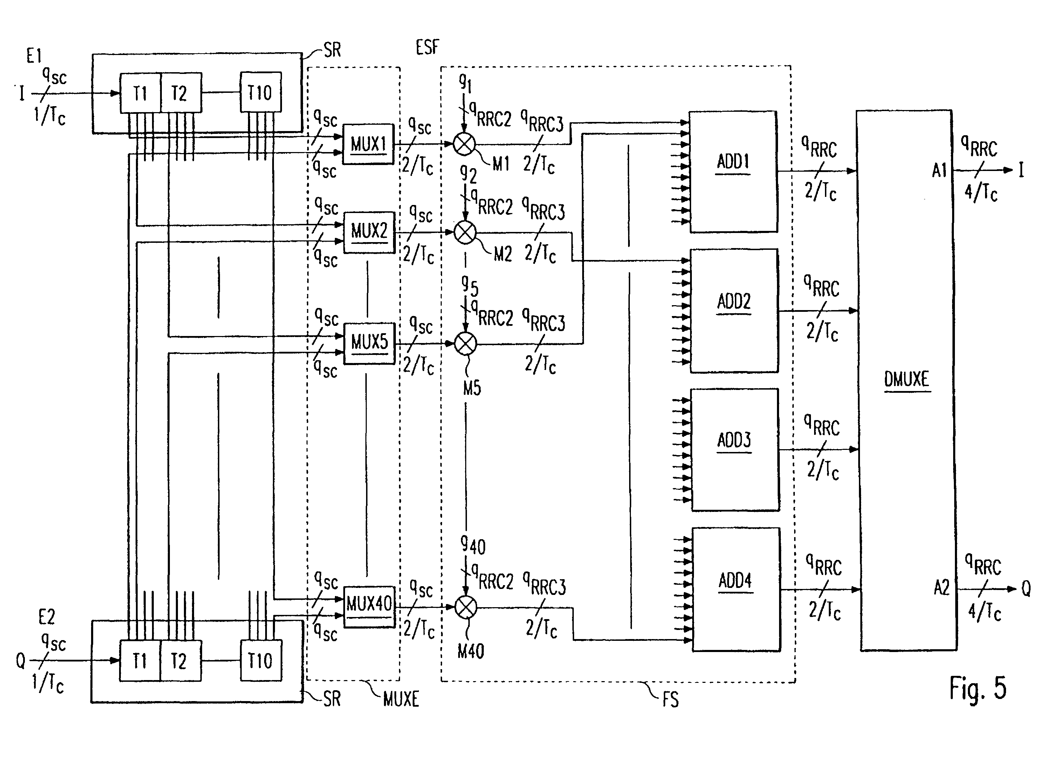

Diese beiden Signalkomponenten werden einer Einrichtung zur spektralen Signalformung ESF an ihren Eingängen E1, E2 zugeführt. An ihren Ausgängen A1, A2 stellt die Einrichtung zur spektralen Signalformung ESF die spektral geformten (d.h. modulierten) I- bzw. Q-Signalkomponenten mit einer M-fach erhöhten Signalrate bereit. Die Einrichtung zur spektralen Signalformung ESF wird weiter unten in Fig. 5 noch näher erläutert.

Der Einrichtung zur spektralen Signalformung ESF ist eine Frequenzkorrektureinrichtung FK nachgeschaltet. Fig. 3 zeigt eine erste Ausführungsvariante einer derartigen Frequenzkorrektureinrichtung FK. Diese umfaßt pro Signalkomponente zwei Multiplizierer M, mittels welcher der Realteil fᵣ und der Imaginärteil fᵢ von komplexen Elementen der Frequenzkorrekturfolge F (siehe Fig. 2) mit der M-fach erhöhten Signalrate M/T_{c} auf die entsprechende Signalkomponente aufmultipliziert wird. Die durch Aufmultiplikation der Realteile fᵣ gewonnenen Multiplikationsergebnisse werden dann in einem invertierten Addierer AD1' subtrahiert und die durch Aufmultiplikation der Imaginärteile fᵢ gewonnenen Multiplikationsergebnisse werden in einem Addierer AD2' addiert.

Die Frequenzkorrektureinrichtung FK ist konstruktiv identisch mit dem komplexen Verwürfler CS und unterscheidet sich von letzterem lediglich dadurch, daß die Real- und Imaginärteile fᵣ und fᵢ eine Wortbreite q_{fc} > 1 aufweisen und die Frequenzkorrektur wie bereits erwähnt bei einer M-fach erhöhten Signalrate erfolgt. Am Ausgang der Frequenzkorrektureinrichtung FK liegen I- und Q-Signalkomponenten mit einer Wortbreite von jeweils qₒᵤₜ und einer Signalrate von M/T_{c} vor.

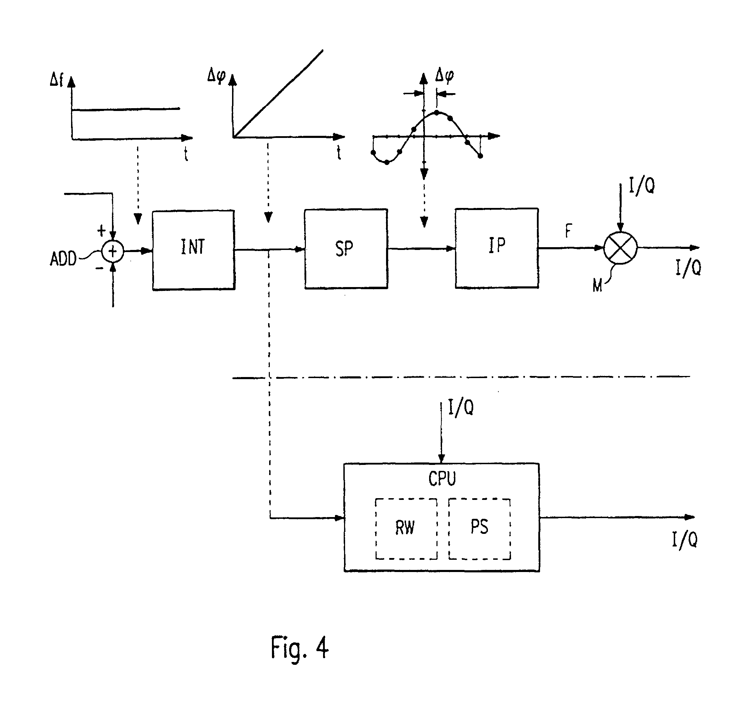

Fig. 4 dient zur Erläuterung der Funktionsweise der in Fig. 3 gezeigten Frequenzkorrektureinrichtung FK sowie einer Varianten derselben.

Sowohl in der Sendeeinrichtung SE (siehe Fig. 1) als auch in einer korrespondierenden Empfangseinrichtung (nicht dargestellt) befinden sich lokale Oszillatoren, die herstellungsbedingt eine etwas unterschiedliche Frequenz aufweisen können und ferner temperatur- und druckabhängige Frequenzdrifts zeigen. Daher sind in der Regel die Sende- und Empfangsfrequenzen unterschiedlich. Eine weitere Ursache für das Auftreten einer Frequenzdifferenz Δf zwischen Sende- und Empfangseinrichtung ist auf die Dopplerverschiebung bei relativ zueinander bewegten Sender und Empfänger zurückzuführen.

In einem invertierten Addierer ADD wird in ständiger Wiederholung diese Frequenzdifferenz Δf ermittelt. Es wird angenommen, daß die Frequenzdifferenz Δf (zumindest kurzzeitig) zeitlich konstant sei, wie dies in dem über dem Ausgang des invertierten Addierers ADD dargestellten Schaubild der Frequenzdifferenz Δf über der Zeit t veranschaulicht ist.

Dem invertierten Addierer ADD ist ein Integrierglied INT nachgeschaltet. Am Ausgang des Integrierglieds INT wird die durch die Frequenzverschiebung Δf bewirkte Phasendifferenz Δϕ bereitgestellt. Bei einer zeitlich konstanten Frequenzdifferenz Δf laufen die zugehörigen Schwingungsphasen linear auseinander, d.h. Δϕ nimmt linear mit der Zeit t zu (siehe das Schaubild über dem Ausgang des Integriergliedes INT).

Gemäß einer ersten Variante, die oberhalb der strichpunktierten Linie in Fig. 4 dargestellt ist und mit der in Fig. 3 gezeigten Frequenzkorrektureinrichtung FK korrespondiert, wird aus der Phasendifferenz Δϕ die Frequenzkorrekturfolge F berechnet. Hierfür ist dem Integrierglied INT ein Datenspeicher SP nachgeschaltet, in dem zu jeder Phasenverschiebung Δϕ ein Datensatz von Abtastwerten der zugehörigen (d.h. um Δϕ phasenverschobenen) Kosinus-Funktion abgelegt ist. Der entsprechende Datensatz (siehe das Schaubild über dem Ausgang des Datenspeichers SP) wird einem optionalen Interpolationsfilter IP zugeführt. Das digitale Interpolationsfilter IP generiert bei Bedarf Abtast-Zwischenwerte, so daß die von dem Interpolationsfilter IP ausgegebene Frequenzkorrekturfolge F die gleiche Signalrate M/T_{c} wie die in die Frequenzkorrektureinrichtung FK einlaufende I- bzw. Q-Signalkomponente hat.

Der dem Interpolationsfilter IP nachgeschaltete Multiplizierer M entspricht einem der Multiplizierer M der Frequenzkorrektureinrichtung FK in Fig. 3.

Eine zweite Variante zur Erzeugung der frequenzkorrigierten I- und Q-Signalkomponenten ist in Fig. 4 unterhalb der strichpunktierten Linie dargestellt. In diesem Fall wird das von dem Integrierglied INT ausgegebene Phasendifferenzsignal Δϕ einer Zentraleinheit CPU zugeführt. Die Zentraleinheit CPU umfaßt in üblicher Weise ein Rechenwerk RW und einen Programmspeicher PS. In dem Programmspeicher PS ist ein Berechnungsprogramm für trigonometrische Funktionen basierend auf dem CORDIC-(COordinate Rotation Digital Computer)Algorithmus abgelegt. Das Berechnungsprogramm wird von dem Rechenwerk RW ausgeführt. Die Zentraleinheit CPU kann als ein sog. Pipeline-CORDIC-Prozessor realisiert sein.

Die Zentraleinheit CPU nimmt die von der Signalformungseinrichtung ESF ausgegebenen I- und Q-Signalkomponenten direkt entgegen und stellt an ihrem Ausgang die frequenzkorrigierten I- und Q-Signalkomponenten bereit. Die Frequenzkorrektureinrichtung FK (siehe Fig. 3) ist in diesem Fall durch die Zentraleinheit CPU ersetzt, und die in Fig. 2 dargestellte Firmware/Hardware-Partitionierung ist in bezug auf VC-S und dem ausgangsseitigen Teil von MOD' zu modifizieren. Der wesentliche Vorteil zu der im oberen Teil von Fig. 4 erläuterten Erzeugung der frequenzkorrigierten I- und Q-Signalkomponenten besteht darin, daß bei Verwendung eines CORDIC-Algorithmus eine grundsätzlich beliebig hohe Genauigkeit der Frequenzkorrektur erreichbar ist, da die Granularität eines CORDIC-Prozessors prinzipiell beliebig klein gemacht werden kann. Verwiesen wird in diesem Zusammenhang beispielsweise auf die Veröffentlichung "Granularly-Pipelined CORDIC Processors for Sine and Cosine Generators" von Shaoyun Wang, et al., Proceedings of the 1996 IEEE International Conference on Acoustics, Speech and Signal Processing, Atlanta, GA, Seiten 3299-3302, 1996.

Demgegenüber weist die erste Variante (d.h. Verwendung eines Speichers SP und eines Interpolationsfilters IP) den Vorteil einer Rechenaufwands-günstigeren und damit schnelleren Datenverarbeitung auf.

Die Fig. 5 zeigt die Einrichtung zur spektralen Signalformung ESF in Blockschaltbildform.

Die noch ungefilterten I- und Q-Signalkomponenten werden jeweils einem Schieberegister SR mit zehn Speicherplätzen T1, T2, ..., T10 zugeführt. Jeder Speicherplatz T1, T2, ..., T10 speichert ein Datenwort der Wortbreite q_{sc}. Die Datenwörter werden im Chiptakt 1/T_{c} durch die Schieberegister SR hindurchgeschoben.

An jedem Speicherplatz T1, T2, ..., T10 beider Schieberegister SR befinden sich jeweils vier Abgriffe, so daß jedes Schieberegister SR insgesamt 40 Abgriffe aufweist. Die insgesamt 80 Abgriffe der beiden Schieberegister SR werden einer Multiplexiereinheit MUXE zugeführt.

Die Multiplexiereinheit MUXE umfaßt 40 Multiplexer MUX1, MUX2, ..., MUX40. Jeder Multiplexer MUX1, MUX2, ..., MUX40 hat zwei Multiplexereingänge. Der erste Abgriff der ersten Speicherzelle T1 des Schieberegisters SR im I-Signalpfad führt zu dem einen Multiplexereingang des ersten Multiplexers MUX1 und der erste Abgriff der ersten Speicherzelle T1 des Schieberegisters SR im Q-Signalpfad führt zu dem zweiten Multiplexereingang des ersten Multiplexers MUX1. In analoger Weise führen jeweils die zweiten Abgriffe der beiden Schieberegister SR zu den beiden Multiplexereingängen des zweiten Multiplexers MUX2, ..., und die beiden vierzigsten Abgriffe der Schieberegister SR führen zu den beiden Multiplexereingängen des vierzigsten Multiplexers MUX40.

Die Multiplexer MUX1, MUX2, ..., MUX40 leiten abwechselnd die von den I- und den Q-Signalkomponenten stammenden Signalwörter weiter, wobei zur Zwischenspeicherung der momentan gerade nicht am Multiplexerausgang ausgegebenen Signalwörter Zwischenspeicher in den Multiplexern MUX1, MUX2, ..., MUX40 vorhanden sind.

An den vierzig Ausgängen der Multiplexiereinheit MUXE stehen mit einer Signalrate von 2/T_{c} (abwechselnd) Signalwörter der Wortbreite q_{sc} der I- und Q-Signalkomponenten bereit.

Die vierzig Ausgänge der Multiplexiereinheit MUXE werden einer Filterschaltung FS zugeführt. Die Filterschaltung FS umfaßt vierzig Multiplizierer M1, M2, ..., M40 sowie vier Addierer ADD1, ADD2, ADD3 und ADD4. Jeder Multiplizierer M1, M2, ..., M40 multipliziert ein Ausgangssignal der Multiplexiereinheit MUXE mit einem einzigen Filterkoeffizienten g₁, g₂, ..., g₄₀. Die Filterkoeffizienten g₁, g₂, ..., g₄₀ werden durch zehn Abtastwerte mit 4-facher Überabtastung einer spektralen Filterfunktion (d.h. der Übertragungsfunktion der Filterschaltung) bestimmt.

Die spektrale Filterfunktion kann beispielsweise eine RRC-(root raised cosine)Funktion sein. Eine solche Filterschaltung wird als RRC-Filterschaltung bezeichnet. Die RRC-Funktion ist durch den funktionalen Zusammenhang (1 + cos x)^{1/2}/2^{1/2} im Bereich 0 ≤ x < π definiert, welcher den Verlauf der Filterflanke im Spektralbereich wiedergibt.

Die Addierer ADD1, ADD2, ADD3, ADD4 weisen jeweils zehn Addiereingänge auf. Die zehn Addiereingänge des Addierers ADD1 sind mit den Ausgängen der Multiplizierer M1, M5, M9, M13, M17, M21, M25, M29, M33 und M37 verbunden, die Eingänge des Addierers ADD2 sind mit den Ausgängen der Multiplizierer M2, M6, M10, M14, M18, M22, M26, M30, M34, M38 verbunden, usw. Mit anderen Worten sind die vier Addierer ADD1 bis ADD4 den vier Abgriffen 1 bis 4 jedes Speicherplatzes T1, T2, ..., T10 der Schieberegister SR zugeordnet.

Der Filterschaltung FS ist eine Demultiplexiereinheit DMUXE nachgeschaltet. Die Demultiplexiereinheit DMUXE demultiplext zunächst jeden Addiererausgang in bezug auf die I- und Q-Signalkomponenten und multiplext anschließend jeweils getrennt für die I-Signalkomponente und die Q-Signalkomponente die Ergebnisse der vier Addierer ADD1, ADD2, ADD3, ADD4. Auf diese Weise entsteht an dem Ausgang A1 der Einrichtung zur spektralen Signalerformung ESF eine vierfach überabgetastete (gefilterte) I-Signalkomponente und an dem Ausgang A2 eine vierfach überabgetastete (gefilterte) Q-Signalkomponente.

## Patentansprüche

1. Einrichtung zur Verarbeitung eines digitalen Datensignals in einem CDMA-Funksender,
- mit einer Kanalisierungseinrichtung (SC), in der dem digitalen Datensignal ein Kanal-individueller CDMA-Code (Cₗ; C1, C2, C3, C4) aufgeprägt wird,
- mit einer spektralen Formungseinrichtung (ESF), in der das digitale, Kanal-individualisierte Datensignal einer spektralen Formung unterzogen wird, und
- mit einer Frequenzkorrektureinrichtung (FK), in der das digitale, spektral geformte Datensignal spektral verschoben wird.

2. Einrichtung nach Anspruch 1,
**dadurch gekennzeichnet,**
- **daß** das von der spektralen Formungseinrichtung (ESF) ausgegebene digitale, spektral geformte Datensignal eine M-fach höhere Signalrate als das digitale, Kanal-individualisierte Datensignal am Ausgang der Kanalisierungseinrichtung (SC) aufweist, wobei M eine ganze Zahl ist und M ≥ 2 gilt.

3. Einrichtung nach Anspruch 1 oder 2,
**dadurch gekennzeichnet,**
- **daß** die Frequenzkorrektureinrichtung (FK) einen Multiplizierer (M) umfaßt, mittels welchem eine schmalbandige Frequenzkorrekturfolge (F) auf das digitale, spektral geformte Datensignal aufmultipliziert wird.

4. Einrichtung nach einem der Ansprüche 1 oder 2,
**dadurch gekennzeichnet,**
- **daß** die Frequenzkorrektureinrichtung (FK) ein Rechenwerk (RW) umfaßt, welches durch Ausführung eines CORDIC-Algorithmus aus dem digitalen, spektral geformten Datensignal ein frequenzkorrigiertes, spektral geformtes Datensignal berechnet.

5. Einrichtung nach einem der vorhergehenden Ansprüche,
**dadurch gekennzeichnet,**
- **daß** ein CDMA-Code (C₁; C1, C2, C3, C4) mit variablem Spreizfaktor Q, insbesondere mit 4 ≤ Q ≤ 512, eingesetzt wird.

6. Einrichtung nach einem der vorhergehenden Ansprüche,
**dadurch gekennzeichnet,**
- **daß** in dem Signalweg zwischen der Kanalisierungseinrichtung (SC) und der spektralen Formungseinrichtung (ESF) eine komplexe Verwürfelungseinrichtung (CS) vorgesehen ist, die dem digitalen, Kanal-individualisierten Datensignal eine Basisstations-Kennung aufprägt.

7. Einrichtung nach einem der vorhergehenden Ansprüche,
**dadurch gekennzeichnet,**
- **daß** in dem Signalweg vor der Kanalisierungseinrichtung (SC) eine Gewichtungseinrichtung (WG) vorgesehen ist, welche jedes Datensymbol der Datenfolge mit einem Gewichtsfaktor (w1, w2, w3, w4) multipliziert.

8. Einrichtung nach einem der vorhergehenden Ansprüche,
**dadurch gekennzeichnet,**
- **daß** die Kanalisierungseinrichtung (SC), die spektrale Formungseinrichtung (ESF) und die Frequenzkorrektureinrichtung (FK) als logische Schaltwerke ausgeführt sind.

9. Verfahren zur Verarbeitung eines digitalen Datensignals in einem CDMA-Funksender, bei welchem
- einem digitalen Datensignal ein Kanal-individueller CDMA-Code (C₁; C1, C2, C3, C4) aufgeprägt wird,
- das digitale, Kanal-individualisierte Datensignal einer spektralen Formung unterzogen wird, und
- das digitale, spektral geformte Datensignal zur Durchführung einer Frequenzkorrektur spektral verschoben wird.

10. Verfahren nach Anspruch 9,
**dadurch gekennzeichnet,**
- **daß** die digitale Frequenzkorrektur an dem spektral geformten Datensignal mit einer Taktrate durchgeführt wird, die um das (Q x M)-fache höher ist als die Datensymbolrate des digitalen Datensignals, wobei Q der Spreizfaktor des verwendeten CDMA-Codes (C₁; C1, C2, C3, C4) und M eine ganze Zahl mit M ≥ 2 ist.

11. Verfahren nach Anspruch 9 oder 10
**dadurch gekennzeichnet,**
- **daß** die digitale Frequenzkorrektur durch Aufmultiplikation einer schmalbandigen Frequenzkorrekturfolge (F) auf das digitale, spektral geformte Datensignal erfolgt.

12. Verfahren nach Anspruch 9 oder 10
**dadurch gekennzeichnet,**
- **daß** die digitale Frequenzkorrektur durch Ausführung eines CORDIC-Algorithmus zur Berechnung eines frequenzkorrigierten Datensignals aus dem digitalen, spektral geformten Datensignal erfolgt.

## Claims

1. Device for processing a digital data signal in a CDMA radio transmitter,
- with a channelling device (SC), in which a channel-individual CDMA code (Cₗ; C1, C2, C3, C4) is added to the digital data signal,
- with a spectral shaping device (ESF), in which the digital, channel-individualized data signal is subjected to spectral shaping, and
- with a frequency correction device (FK) in which the digital, spectrally shaped data signal is spectrally shifted.

2. Device according to Claim 1,
**characterized in that**
- the digital, spectrally shaped data signal output by the spectral shaping device (ESF) has an M-fold higher signal rate than the digital, channel-individualized data signal at the output of the channelling device (SC), where M is an integer and M ≥ 2.

3. Device according to Claim 1 or 2,
**characterized in that**
the frequency correction device (FK) comprises a multiplier (M) by means of which a narrowband frequency correction sequence (F) is multiplied onto the digital, spectrally shaped data signal.

4. Device according to Claims 1 or 2,
**characterized in that**
- the frequency correction device (FK) comprises an arithmetic unit (RW) which, by running a CORDIC algorithm, calculates a frequency-corrected, spectrally shaped data signal from the digital, spectrally shaped data signal.

5. Device according to one of the preceding claims,
**characterized in that**
- a CDMA code (C₁; C1, C2, C3, C4) with a variable spread factor Q, in particular with 4 ≤ Q ≤ 512, is used.

6. Device according to one of the preceding claims,
**characterized in that**
- a complex scrambling device (CS), which adds a base station ID to the digital, channel-individualized data signal, is provided in the signal path between the channelling device (SC) and the spectral shaping device (ESF).

7. Device according to one of the preceding claims,
**characterized in that**
- a weighting device (WG), which multiplies each data symbol of the data string by a weighting factor (wl, w2, w3, w4), is provided in the signal path upstream of the channelling device (SC).

8. Device according to one of the preceding claims,
**characterized in that**
- the channelling device (SC), the spectral shaping device (ESF) and the frequency correction device (FK) are designed as logical switching elements.

9. Method for processing a digital data signal in a CDMA radio transmitter, in which
- a channel-individual CDMA code (C₁; Cl, C2, C3, C4) is added to a digital data signal,
- the digital, channel-individualized data signal is subjected to spectral shaping, and
- the digital, spectrally shaped data signal is spectrally shifted in order to carry out a frequency correction.

10. Method according to claim 9,
**characterized in that**
- the digital frequency correction is performed on the ' spectrally shaped data signal at a clock rate which is (Q x M) times higher than the data symbol rate of the digital data signal, where Q is the spread factor of the CDMA code (C₁; C1, C2, C3, C4) which is used and M is an integer where M ≥ 2.

11. Method according to Claim 9 or 10,
**characterized in that**
- the digital frequency correction is carried out by multiplying a narrowband frequency correction sequence (F) onto the digital, spectrally shaped data signal.

12. Method according to Claim 9 or 10,
**characterized in that**
- the digital frequency correction is carried out by running a CORDIC algorithm to calculate a frequency-corrected data signal from the digital, spectrally shaped data signal.

## Revendications

1. Dispositif de traitement d'un signal de données numérique dans un émetteur radio CDMA,
- comportant un dispositif de canalisation (SC) dans lequel un code CDMA (C_{|} ; C1, C2, C3, C4) propre au canal est appliqué au signal de données numérique,
- comportant un dispositif de mise en forme spectrale (ESF) dans lequel le signal de données numérique et individualisé pour le canal est soumis à une mise en forme spectrale, et
- comportant un dispositif de correction de fréquence (FK) dans lequel le signal de données numérique et mis en forme spectralement est décalé spectralement.

2. Dispositif selon la revendication 1,
**caractérisé par le fait que** le signal de données numérique et mis en forme spectralement qui est fourni par le dispositif de mise en fomle spectrale (ESF) présente un débit de signal M fois supérieur au signal de données numérique individualisé pour le canal à la sortie du dispositif de canalisation (SC), M étant un nombre entier avec M ≥ 2.

3. Dispositif selon la revendication 1 ou 2,
**caractérisé par le fait que** le dispositif de correction de fréquence (FK) comprend un multiplicateur (M) au moyen duquel une séquence de correction de fréquence (F) à bande étroite est multipliée par le signal de données numérique mis en forme spectralement.

4. Dispositif selon l'une des revendications 1 ou 2,
**caractérisé par le fait que** le dispositif de correction de fréquence (FK) comprend un calculateur (RW) qui calcule, en exécutant un algorithme CORDIC à partir du signal de données numérique mis en forme spectralement, un signal de données mis en forme spectralement et corrigé en fréquence.

5. Dispositif selon l'une des revendications précédentes,
**caractérisé par le fait qu'**un code CDMA (Cₗ ; C1, C2, C3, C4) avec facteur d'étalement Q variable, notamment avec 4 ≤ Q < 512, est utilisé.

6. Dispositif selon l'une des revendications précédentes,
**caractérisé par le fait que**, dans le trajet du signal entre le dispositif de canalisation (SC) et le dispositif de mise en forme spectrale (ESF), il est prévu un dispositif de cryptage complexe (CS) qui applique un identificateur de station de base au signal de données numérique et individualisé pour le canal.

7. Dispositif selon l'une des revendications précédentes,
**caractérisé par le fait que**, dans le trajet du signal avant le dispositif de canalisation (SC), il est prévu un dispositif de pondération (WG) qui multiplie chaque symbole de données de la séquence de données par un facteur de pondération (w1, w2, w3, w4).

8. Dispositif selon l'une des revendications précédentes,
**caractérisé par le fait que** le dispositif de canalisation (SC), le dispositif de mise en forme spectrale (ESF) et le dispositif de correction de fréquence (FK) sont réalisés sous forme de circuits logiques.

9. Procédé de traitement d'un signal de données numérique dans un émetteur radio CDMA, dans lequel
- on applique à un signal de données numérique un code CDMA (C_{|} ; C1, C2, C3, C4) propre au canal,
- on soumet le signal de données numérique et individualisé pour le canal à une mise en forme spectrale, et
- on décale spectralement le signal de données numérique et mis en forme spectralement pour la mise en oeuvre d'une correction de fréquence.

10. Procédé selon la revendication 9,
**caractérisé par le fait que** la correction numérique de fréquence est effectuée sur le signal de données mis en forme spectralement avec un débit d'horloge qui est (Q x M) fois supérieur au débit de symboles de données du signal de données numérique, Q étant le facteur d'étalement du code CDMA (Cₗ ; C1, C2, C3, C4) utilisé et M étant un nombre entier avec M ≥ 2.

11. Procédé selon la revendication 9 ou 10,
**caractérisé par le fait que** la correction numérique de fréquence s'effectue par multiplication d'une séquence de correction de fréquence (F) à bande étroite par le signal de données numérique et mis en forme spectralement.

12. Procédé selon la revendication 9 ou 10,
**caractérisé par le fait que** la correction numérique de fréquence s'effectue par exécution d'un algorithme CORDIC pour le calcul d'un signal de données corrigé en fréquence à partir du signal de données numérique et mis en forme spectralement.
